# EUROPÄISCHE PATENTSCHRIFT

(11) **EP 0 901 639 B1**
(45) Veröffentlichungstag und Bekanntmachung des Hinweises auf die Patenterteilung: **11.07.2001**
(21) Anmeldenummer: 97927031.1
(22) Anmeldetag: 23.05.1997
(51) Int. Cl.: G01S 3/783

(54) **VERFAHREN UND VORRICHTUNG ZUR RICHTUNGSBESTIMMUNG ZU EINEM OBJEKT**
METHOD AND DEVICE FOR DETERMINING THE DIRECTION IN WHICH AN OBJECT IS LOCATED
PROCEDE ET DISPOSITIF POUR LA DETERMINATION DE LA DIRECTION DANS LAQUELLE SE TROUVE UN OBJET

(30) Priorität: 25.05.1996 DE 19621195
(43) Veröffentlichungstag der Anmeldung: 17.03.1999
(73) Patentinhaber: Leica Geosystems AG, 9435 Heerbrugg (CH)
(72) Erfinder: BRAUNECKER, Bernhard, CH-9445 Rebstein (CH); GÄCHTER, Bernhard, F., CH-9436 Balgach (CH); ROGERS, John, Rice, Sierra Madre, CA 91024 (US)
(74) Vertreter: Büchel, Kurt F., Dr.
(86) Internationale Anmeldenummer: EP9702659
(87) Internationale Veröffentlichungsnummer: WO9745751

(56) Entgegenhaltungen:
- WO-A-92/07281
- US-A- 4 857 721
- US-A- 5 428 215

## Beschreibung

Die Erfindung bezieht sich auf ein Verfahren und eine Vorrichtung zur Bestimmung der durch einen horizontalen und vertikalen Winkel definierten Richtung zu einem Objekt, welches eine optische Strahlung emittiert oder reflektiert, wobei die Strahlung von einer Abbildungsoptik zur Erzeugung eines reellen Objektbildes auf einem ortsauflösenden optoelektronischen Detektor aufgenommen wird, die Detektorsignale einer Auswerteeinrichtung zugeführt werden und aus den Koordinaten des Objektbildes auf dem Detektor die Richtung zum Objekt ermittelt wird.

Die von dem Objekt kommende Strahlung soll im optischen Wellenlängenbereich liegen und vom Objekt emittiert, gestreut oder reflektiert werden.

In WO 92/07281 A ist eine Vorrichtung zur Bestimmung der Position eines beleuchteten Objektes unter Ausschluß einer Abbildungsoptik offenbart. Die vom Objekt reflektierte Strahlung wird über einen Umlenkspiegel auf eine transparente Maske gelenkt. Die Maske ist mit einem Strichmuster versehen, welches durch Schattenwurf ein entsprechendes Schattenmuster auf einem ortsempfindlichen Detektor erzeugt. Das detektierte Schattenmuster wird mit dem vorher abgespeicherten Strichmuster der Maske verglichen und korreliert, wodurch die Position des Schattenmusters auf dem Detektor und somit die Position des Objekts bestimmt ist. Durch das Schattenmuster tragen viele Detektorelemente zur Messung und somit zum Auflösungsvermögen der Vorrichtung bei im Gegensatz zu einer Abbildung des punktförmigen Objektes mit einem nur wenige Detektorelemente beleuchtenden Fokusfleck.

Aus der US 4 857 721 ist ein optischer Richtungssensor bekannt, bei dem das ankommende Licht durch einen langen, schmalen Spalt auf eine Maske mit einem binären Codemuster fällt. Das Codemuster ist in einer Vielzahl benachbarter, paralleler Streifen mit direkt darunterliegenden streifenförmigen Detektorelementen angeordnet. Die Streifen sind senkrecht zum Spalt ausgerichtet, so daß bei Lichteinfall der Spalt einen Lichtstrich quer zu den Code- und Detektorstreifen erzeugt. Aus dem quer über die Streifen detektierten binären Code ist der zugeordnete Einfallswinkel bestimmt.

Die US 5 428 215 offenbart einen Winkelsensor für einen kollimierten Laserstrahl. Der Laserstrahl beleuchtet eine Schattenwurfmaske mit parallelen Schlitzen, die gemäß einem digitalen Graycode angeordnet sind. In einem vorbestimmten Abstand zur Schattenwurfmaske nimmt ein lineares Detektorarray in Abhängigkeit des Einfallswinkels des Laserstrahls das durch die Schlitze fallende Licht auf.

Aus der DE 32 33 013 A1 ist eine optische Anordnung bekannt, mit der die räumliche Lage eines 3-dimensionalen Objektes mittels Kantendetektion erkannt und ausgewertet und die Entfernung zum Objekt ermittelt werden kann. Diese Anordnung ist vor allem bei Bildauswertesystemen für Handhabungsautomaten anwendbar. Zur dreidimensionalen Lageerkennung werden zwei hintereinander angeordnete Objektive mit unterschiedlichen Blendenöffnungen, ein Rasterfilter und eine Fernsehkamera eingesetzt. Es werden bestimmte geometrische Beziehungen sowohl zwischen diesen Baugruppen innerhalb der optischen Anordnung als auch zu dem abzubildenden Objekt eingehalten, um die Abbildungsgleichungen zu erfüllen.

Das Rasterfilter besteht aus räumlich ausgeprägten, periodischen Strukturen, wie z.B. sinusförmig gewölbten Oberflächen, Linsen, Zylinderlinsen oder Prismen mit vorgegebener Schräge oder gekreuzt angeordneten Prismenelementen. Diese Strukturen nutzen die Brechung der Lichtstrahlen, die dadurch um einen bestimmten Winkel α abgelenkt werden und so eine Verschiebung der abzubildenden Objektpunkte bewirken. Durch die periodischen Strukturen des Rasterfilters werden die Helligkeitsübergänge an den Kanten des Objektes periodisch moduliert. Sie werden von der Fernsehkamera zeilenweise aufgenommenen und die Signale elektronisch ausgewertet. Die periodischen Störungen des Kantenbildes enthalten in einer durch das Rasterfilter codierten Form die Informationen über die Drehlage und den Verlauf der Objektkonturen. Die Entfernung zum Objekt wird aufgrund der bestehenden funktionalen Zusammenhänge ebenfalls aus der Überlagerung der abgebildeten Objektkonturen mit der Rasterstruktur des Rasterfilters abgeleitet.

Die Verwendung von refraktiven, räumlichen Strukturen für das Rasterfilter sowie die Verwendung zweier Objektive und die Einhaltung einer Reihe von geometrischen Bedingungen bedeuten einen umfangreichen Herstellungs- und Justieraufwand. Die Aufnahme durch die Fernsehkamera erfolgt mit der durch die Videoabtastung vorgegebenen Auflösung.

Aus der CH 665 715 A5 ist ein Verfahren zum Messen der Winkelablage eines Objektes mittels objektbezogener und als optisch strukturierte Rasterscheiben ausgebildeter Zielmarken bekannt. Dabei wird ein Bild der Zielmarke fotoeiektrisch ausgewertet, und die so erhaltenen Informationen werden mit einer der Zielmarke entsprechenden Referenzmarke verglichen. Im einzelnen wird die mit einem definierten Zentrum versehene Zielmarke auf die Detektionsebene eines Detektor-Arrays abgebildet, worauf die so erhaltenen Werte einem Korrelationsvergleich mit der Referenzmarke unterzogen werden. Aus dem Vergleichsergebnis wird sodann die Ablage des Zentrums der Zielmarke von der optischen Achse berechnet. Die verfügbare Auflösung der Objektstruktur und - lage ist bei diesem bekannten Verfahren in erster Linie durch die einzelnen Detektionsbereiche des Detektor-Arrays, d.h. die diskrete Pixelgeometrie, gegeben und entsprechend begrenzt.

In der Zeitschrift Technische Rundschau Nr. 39, 1988 werden auf S. 14-18 unter dem Titel "Theodolitsysteme für industrielle und geodätische Messungen" von W. Huep und O. Katowski Theodolitsysteme beschrieben, die zur berührungslosen Vermessung von Oberflächen wie z.B. Verkleidungen von Flugzeugen oder Karosserieteilen mit Hilfe von reflektierenden Zielmarken eingesetzt werden. Hierbei beleuchtet ein koaxial zur Achse des Theodolitfernrohrs angeordneter Scheinwerfer eine Zielmarke, die vom Theodolitfernrohr auf einem CCD-Array als ortsauflösendem Detektor abgebildet wird. Eine elektronische Auswerteeinrichtung mit einem Rechner bestimmt den Mittelpunkt des Zielmarkenbildes. Aus den Mittelpunktskoordinaten des Zielmarkenbildes auf dem CCD-Array wird der horizontale und vertikale Winkel der Zielmarke in einem vorgegebenen Koordinatensystem ermittelt.

Als Zielmarken dienen oberflächenreflektierende Kugeln, z.B. verchromte, polierte Stahlkugeln, die unabhängig von der Beobachtungsrichtung jeweils das gleiche Zielmarkenbild darbieten. Die spiegelnden Kugeln erzeugen ein im Inneren der Kugel liegendes virtuelles Bild der Scheinwerferpupille des Theodoliten, das mit dem Fernrohr des Theodoliten beobachtet und auf dem CCD-Array dargestellt wird. Wegen der kleinen Brennweite der Kugeln ist jedoch das Pupillenbild in der Kugel bereits in kurzer Entfernung zwischen Theodolit und Kugel beugungsbegrenzt klein, und es ist auf dem CCD-Array kleiner als dessen Pixelgröße. Damit überhaupt eine Aufnahme erfolgen kann, wird das Theodolitfernrohr derart defokussiert, daß ein Lichtfleck entsteht, der von mehreren Pixeln des CCD-Arrays aufgenommen werden kann. Aus dem so gewonnenen Lichtfleck wird dessen Mittelpunkt durch Schwerpunkt- oder Konturauswertung bestimmt. Aufgrund der Defokussierung führen allerdings die unterschiedliche Intensitätsverteilung der Strahlung im Lichtfleck und dessen unscharfer Rand zu Meßfehlern.

Generell können natürlich Objektive mit einem großen Abbildungsmaßstab oder einem zur Entfernungsanpassung variablen Abbildungsmaßstab verwendet werden, um ein ausreichend großes Bild auf dem CCD-Array zu erhalten. Dadurch könnte beispielsweise das genannte Defokussieren des Theodolitfernrohrs zur Erzeugung eines ausreichend großen Lichtfleckdurchmessers entfallen. Jedoch hat ein großer Abbildungsmaßstab den Einsatz einer entsprechend großen Objektivbrennweite zur Folge. Spezielle Fernrohrobjektive oder Kollimatoren besitzen hierfür Brennweiten von 2m und mehr. Dabei wird zwangsläufig der Winkelmeßbereich bei gleicher Detektorgröße deutlich eingeschränkt. Zudem ergeben Kollimatoren mit derartigen Brennweiten großvolumige optische Instrumente mit großem Gewicht.

Der Erfindung liegt die Aufgabe zugrunde, ein Verfahren und eine Vorrichtung anzugeben, womit bei sehr geringem Aufwand an optischen Bauteilen und Justierungen und bei drastisch verkürzten mechanischen Baulängen die Richtung der von einem Objekt kommenden optischen Strahlung innerhalb eines großen Winkelmeßbereichs bestimmt werden kann, wobei eine Präzision erreicht werden soll, die weit über das konstruktiv bedingte Ortsauflösungsvermögen eines einzusetzenden optoelektronischen Detektors hinausgeht.

Diese Aufgabe wird erfindungsgemäß dadurch gelöst, daß die Wellenfront der vom Objekt kommenden Strahlung zusätzlich zur abbildenden Wirkung der Abbildungsoptik mit einem optischen Element derart strukturiert wird, daß auf dem Detektor eine Intensitätsverteilung mit mehr als einem Intensitätsmaximum erzeugt wird, wobei die Intensitätsverteilung nicht durch Schattenwurf entsteht, und daß aus der gemessenen Intensitätsverteilung unter Einbeziehung der Strukturfunktion des optischen Elements die Richtung zum Objekt ermittelt wird. Weiterhin wird die Aufgabe durch die im kennzeichnenden Teil des Vorrichtungsanspruchs 3 angegebenen Merkmale gelöst.

Vorteilhafte Weiterbildungen und Verbesserungen der Erfindung ergeben sich aus den Merkmalen der Unteransprüche.

Die von einer Punktlichtquelle emittierte Strahlung breitet sich in einem homogenen Medium in alle Raumrichtungen kugelförmig aus. Dies bedeutet, daß die Flächen gleicher Phase Kugeloberflächen sind und sich ausdehnen. Eine Kugeloberfläche ist in größerer Entfernung zu ihrem Mittelpunkt und in einem kleinen Ausschnitt betrachtet nahezu eben. Entspricht diesem Ausschnitt die Öffnung einer Abbildungsoptik, so empfängt diese eine angenähert ebene Welle oder - im Strahlenbild betrachtet - nahezu parallele Strahlen.

Die Abbildungsoptik, die im einfachsten Fall durch eine Sammellinse dargestellt werden kann, fokussiert eine solche Strahlung in ihrer Brennebene. Deswegen erscheint eine weit entfernte Punktlichtquelle punktförmig in der Brennebene der Abbildungsoptik. Dasselbe gilt auch für einen durch Projektion einer Strahlungsquelle auf einem entfernten Objekt erzeugten annähernd punktförmigen Strahlungsfleck. Ebenso wird eine von einer Strahlungsquelle emittierte und durch eine optische Vorrichtung zu einem Parallelstrahlenbündel geformte Strahlung von der Abbildungsoptik punktförmig in ihrer Brennebene abgebildet. Das Parallelstrahlenbündel kann dabei direkt oder über den Weg einer Reflexion an einem ebenen Objekt in die Abbildungsoptik gelangen.

Ein in der Brennebene der Abbildungsoptik angeordneter ortsempfindlicher Detektor registriert bei ausreichendem Ortsauflösungsvermögen die punktförmige Abbildung als Intensitätsmaximum an einem bestimmten Ort. Dieser Ort auf dem Detektor hängt von dem Winkel ab, den das Parallelstrahlenbündel mit der optischen Achse der Abbildungsoptik bildet. Mit zunehmendem Winkel wandert die punktförmige Abbildung von der optischen Achse weg. Bei dreidimensionaler Betrachtung und mit einem zweidimensional ortsempfindlichen Detektor wird jeder Koordinatenpunkt auf dem Detektor in eindeutiger Weise einer Richtung der einfallenden Strahlung zugeordnet, wobei die Richtung durch einen horizontalen und vertikalen Winkel gegeben ist. Erfolgt also eine Richtungsänderung der einfallenden Strahlung durch Veränderung eines oder beider dieser Winkel, so ändern sich damit die Koordinaten des Strahlungspunktes auf der Detektorfläche.

Diese Beschreibung gilt auch für Problemstellungen, bei denen die Messung nur eines Winkels in einer feststehenden Ebene verlangt wird. Die Angabe eines zweiten Winkels ist hierfür unerheblich, er kann willkürlich zu null gesetzt werden. Für einen solchen Fall kann auch ein eindimensional ortsempfindlicher Detektor wie z.B. eine lineare Diodenzeile eingesetzt werden.

Neben den bisher betrachteten ebenen Wellen können natürlich auch Kugelwellen von der Abbildungsoptik aufgenommen werden. In einem solchen Fall befindet sich das Objekt im Nahbereich der Abbildungsoptik und emittiert oder reflektiert eine punktförmige Strahlung. Somit ist eine Scharfeinstellung der Abbildungsoptik notwendig, wobei das Objekt in der Bildebene der Abbildungsoptik abgebildet wird. Dabei muß dann zur Richtungsbestimmung neben den Koordinaten des Bildpunktes auf dem Detektor natürlich auch die eingestellte Bildweite der Abbildungsoptik berücksichtigt werden.

Erfindungsgemäß wird ein optisches Element in den Strahlengang gebracht, das die Wellenfront der vom Objekt kommenden Strahlung derart strukturiert, daß auf dem Detektor statt des herkömmlichen punktförmigen Objektbildes eine Intensitätsverteilung mit mehr als einem Intensitätsmaximum entsteht. Das optische Element kann dabei grundsätzlich an beliebiger Stelle im Strahlengang angeordnet sein. Vorzugsweise wird es aber in der Nähe oder direkt in der Ebene der Austrittspupille oder in einer dazu konjugierten Pupillenebene der Abbildungsoptik angeordnet. Selbstverständlich kann eine konjugierte Pupillenebene auch vor der Abbildungsoptik, d.h. zwischen Abbildungsoptik und Objekt liegen, wobei auch dort das die Wellenfront strukturierende optische Element angeordnet werden kann.

Die physikalische Wirkung des optischen Elements auf die Wellenfront der Strahlung läßt sich mathematisch in eindeutiger Weise durch die Strukturfunktion des optischen Elements beschreiben, die durch den Aufbau des optischen Elements bestimmt ist. Die Strukturfunktion wirkt auf die Wellenfront der Strahlung und führt zu einer entsprechenden Intensitätsverteilung auf dem Detektor. Aufgrund der Eindeutigkeit dieses Zusammenhangs kann in umgekehrter Reihenfolge aus der gemessenen Intensitätsverteilung und mittels der Strukturfunktion des optischen Elements die einfallende Wellenfront rekonstruiert und damit deren Herkunftsrichtung, also die Richtung der vom Objekt kommenden Strahlung bestimmt werden. Prinzipiell ist es auch möglich, statt der Strukturfunktion des optischen Elements das Ergebnis einer vorangegangenen Kalibrierung zu verwenden.

Für die Realisierung eines derartigen die Wellenfront strukturierenden optischen Elements können verschiedene optische Eigenschaften ausgenutzt werden. So läßt sich beispielsweise die Wellenfront der Strahlung durch refraktive, reflektive oder polarisierende Eigenschaften oder auch durch den Effekt der Beugung räumlich beeinflussen.

Bei Einsatz refraktiver Strukturen wird das optische Element durch ortsabhängig unterschiedliche Brechungsindices oder Materialdicken charakterisiert. Um eine gewünschte Intensitätsstruktur auf dem Detektor zu erzielen, kann die räumliche Wellenfrontmodulation durch die sie erzeugende Brechungsindexfunktion bzw. Dickenfunktion entsprechend variiert werden. Die Brechungsindex- und Dickenfunktion stellen die Strukturfunktion des optischen Elements dar.

In ähnlicher Weise können ortsabhängig unterschiedlich polarisierende Bereiche verwendet werden. Dichroitische Materialien liefern eine lineare Polarisation, die je nach Ausrichtung dieser Materialien in Abhängigkeit des Ortes zu verschiedenen Polarisationsrichtungen führen. Im allgemeinen Fall sind auch unterschiedliche elliptische Polarisationszustände möglich, die z.B. mit örtlich variierender Dicke von doppelbrechenden Materialien erzeugt werden. Mit Hilfe eines Analysators entsteht aus der örtlichen Polarisationsmodulation, die in diesem Fall die Strukturfunktion des strukturierenden optischen Elements darstellt, eine entsprechende Intensitätsverteilung auf dem Detektor.

Auch mit Hilfe von Beugungsstrukturen kann das erfindungsgemäße optische Element dargestellt werden. Hierfür lassen sich z.B. Fresnel-Zonenplatten oder holographische Elemente, bei denen die Gitterstruktur lokal variiert, einsetzen. Solche Beugungsstrukturen lassen sich durch verschiedene Lithografie-, Ätzoder Aufdampfverfahren oder durch Prägen, Blankpressen oder Fräsen auf einem Träger herstellen. Dabei kann der Träger für die Strahlung transmittierend oder reflektierend sein, d.h. das optische Element kann in Transmission oder Reflexion eingesetzt werden.

Letztlich können für das optische Element alle physikalischen Effekte ausgenutzt werden, die aus der einfallenden Strahlung eine durch die Struktur des optischen Elements bedingte räumliche Modulation der Wellenfront derart bewirken, daß auf dem Detektor eine Intensitätsverteilung mit mehr als einem Intensitätsmaximum entsteht. Die Intensitätsverteilung kann auch als ein Intensitätsmuster oder als Code betrachtet werden. Bei Richtungsänderung der einfallenden Strahlung verschiebt sich das Intensitätsmuster oder der Code auf dem Detektor.

Die Auswertung der gemessenen Intensitätsverteilung erfolgt beispielsweise mit den bekannten Methoden der Mittelwertbildung oder durch Fit-Algorithmen. Sie liefert eine deutlich verbesserte Genauigkeit der Richtungsmessung gegenüber der Auswertung eines einzelnen Strahlungspunktes, denn die Lageauswertung einer ausgedehnten Struktur führt zu einem besseren Signal-Rauschverhältnis. Zudem wird die Gefahr der Überbelichtung des Detektors deutlich verringert, die sonst bei der Fokussierung der einfallenden Strahlung auf nur einen einzigen Strahlungspunkt stets vorhanden ist. Außerdem ist die Auswertung einer Intensitätsverteilung zuverlässiger, denn Störungen im Strahlengang werden durch die Messung einer Vielzahl von Strahlungspunkten der Intensitätsverteilung leicht ausgeglichen.

Ein besonders verbessertes Ortsauflösungsvermögen und somit eine besondere Meßempfindlichkeit für die Richtungsbestimmung ergibt sich aus einer Intensitätsverteilung, deren Ortsgrundfrequenz oder eine ihrer harmonischen Ortsoberfrequenzen mit der Ortsgrundfrequenz der strahlungsempfindlichen Strukturen des Detektors ein niederfrequentes Überlagerungsmuster bildet. Das niederfrequente Überlagerungsmuster wirkt in derselben Art und Weise wie ein Moire muster. Von Moirémustern ist bekannt, daß sie sehr empfindlich auf eine Verschiebung der sie erzeugenden Strukturen reagieren. Dies bedeutet hier, daß bereits bei einer sehr geringen Verschiebung der Intensitätsverteilung auf dem Detektor gegenüber dessen Pixelstruktur sich das niederfrequente Überlagerungsmuster in seiner Ortsfrequenz stark ändert. Die Änderung des Überlagerungsmusters ist also ein sehr empfindlich reagierender Indikator für Veränderungen der Intensitätsverteilung auf dem Detektor. Damit kann eine Ortsinformation um mehr als einen Faktor 100 besser aufgelöst werden als es von der Geometrie der Pixeistruktur des Detektors her möglich wäre. Daraus resultiert eine entsprechend hohe Genauigkeit der Winkel- und somit Richtungsbestimmung zum Objekt.

Neben der Steigerung der Genauigkeit und der Robustheit der Richtungsmessung bringt die Erzeugung einer strukturierten Lichtverteilung auf dem Detektor noch den weiteren Vorteil der Meßbereichserweiterung mit sich. Bei einer punktförmigen Lichtverteilung wird der Richtungsmeßbereich durch die Größe der Detektorfläche bestimmt. Bei einer strukturierten Intensitätsverteilung ist jedoch die Ausdehnung der räumlichen Strukturen bestimmend. Diese kann erheblich größer sein als die Detektorfläche. Selbst wenn ein größerer Teil der Intensitätsverteilung nicht mehr innerhalb der aktiven Detektorfläche liegt, ist eine Richtungsbestimmung möglich. Dies verdeutlicht folgendes Beispiel. Bereits durch die Beugung an einem einfachen Beugungsgitter mit geradlinigen Strukturen entsteht auf dem Detektor eine Intensitätsverteilung mit einem Hauptmaximum und mehreren, beidseitig angeordneten Nebenmaxima. Dabei können die Nebenmaxima, also die Beugungsmaxima höherer Ordnung, über die aktive Detektorfläche hinausreichen. Liegt aufgrund eines großen Einfallswinkels der Strahlung das Hauptmaximum, das der ursprünglichen punktförmigen Abbildung der Strahlungsquelle entspricht, nicht mehr auf der aktiven Detektorfläche, so kann es aus der Lage der Nebenmaxima rekonstruiert werden. Entscheidend ist nur, daß sich die Nebenmaxima identifizieren lassen, was prinzipiell wegen ihrer unterschiedlichen Intensitäten möglich ist.

Zusammenfassend bestehen die Vorteile der Erfindung darin, daß mit Hilfe des die Wellenfront strukturierenden optischen Elements eine höhere Meßgenauigkeit und ein größerer Meßbereich für die Richtungsbestimmung zu einem Objekt ermöglicht wird. Aufgrund des deutlich verbesserten Ortsauflösungsvermögens genügt eine einfache, kurzbrennweitige Abbildungsoptik. Daraus ergeben sich vorteilhafterweise einerseits erheblich verkürzte mechanische Baulängen und ein geringer Aufwand an optischen Bauteilen und Justierungen. Somit werden Handhabung und Kosten verbessert. Andererseits ermöglichen kurze Brennweiten einen größeren Winkelmeßbereich zum Objekt. Dieser wird außerdem aufgrund der ausgedehnten Intensitätsverteilung über die Detektorgröße hinaus noch wesentlich vergrößert. Dadurch wird selbst dann noch eine Richtungsbestimmung ermöglicht, wenn sich das herkömmliche Objektbild bereits außerhalb der strahlungsempfindlichen Fläche des Detektors befindet.

Folgende Ausführungsbeispiele der Erfindung werden anhand der Zeichnung näher erläutert. Es zeigt
- Fig.1a: eine schematische Darstellung eines die Wellenfront einer Strahlung strukturierenden optischen Elements in Transmission, das separat zwischen einer Abbildungsoptik und einem Detektor angeordnet ist, wobei die ankommende Strahlung ebene Wellenfronten besitzt,
- Fig.1b: eine schematische Darstellung wie in Fig.1a, bei der jedoch das optische Element zwischen Abbildungsoptik und Strahlungsquelle angeordnet ist,
- Fig.2: eine schematische Darstellung gemäß Fig.1a, bei der die von einem Drehspiegel reflektierte Strahlung aufgenommen wird
- Fig.3: eine schematische Darstellung gemäß Fig.1a, wobei jedoch die ankommende Strahlung kugelförmige Wellenfronten besitzt,
- Fig.4: eine schematische Darstellung des Erfindungsgegenstandes, wobei die die Wellenfront der Strahlung räumlich modulierenden Strukturen direkt auf einer Oberfläche einer refraktiven Abbildungsoptik aufgebracht sind,
- Fig.5: eine schematische Darstellung eines die Wellenfront der Strahlung strukturierenden optischen Elements, das zugleich abbildende Eigenschaften aufweist,
- Fig.6: eine schematische Darstellung eines in Reflexion arbeitenden, die Wellenfront der Strahlung strukturierenden optischen Elements,
- Fig.7: eine schematische Darstellung des Erfindungsgegenstandes, wobei die die Wellenfront der Strahlung räumlich modulierenden Strukturen auf einer Oberfläche einer reflexiven Abbildungsoptik aufgebracht sind und
- Fig.8: eine mit dem erfindungsgemäßen optischen Element erzeugte Intensitätsverteilung.

Fig. 1a zeigt eine schematische Darstellung eines die Wellenfront einer Strahlung strukturierenden optischen Elements 14 in Transmission. Das optische Element 14 ist separat zwischen einer Abbildungsoptik 12, in diesem Fall einem Objektiv mit refraktiver Optik, und einem ortsauflösenden optoelektronischen Detektor 13 angeordnet. Als beobachtetes Objekt 10 dient hier eine entfernte Strahlungsquelle, wobei die in die Abbildungsoptik 12 einfallende Strahlung annähernd ebene Wellenfronten 11 besitzt. Ebenso kann als beobachtetes Objekt 10 auch ein reflektierender Körper dienen, der von der Strahlung einer Strahlungsquelle oder durch Streulicht beleuchtet wird und dessen reflektierte Strahlung mit annähernd ebenen Wellenfronten 11 von der Abbildungsoptik 12 aufgenommen wird.

Ohne das optische Element 14 würden die ankommenden ebenen Wellenfronten 11 von der Abbildungsoptik 12 punktförmig am Ort 20 auf dem Detektor 13 abgebildet. Der Durchmesser dieses Strahlungsflecks ist im allgemeinen klein im Vergleich zu den lichtempfindlichen Strukturen des Detektors 13. Somit ist die Ortsgrundfrequenz (Abtastfrequenz) der lichtempfindlichen Detektorstrukturen zu klein, um die hohen Ortsfrequenzanteile der punktförmigen Intensitätsverteilung zu erfassen. Wird nun das erfindungsgemäße, die Wellenfront 11 der Strahlung strukturierende optische Element 14 in den Strahlengang gemäß Fig.1a eingebracht, so werden die ankommenden Wellenfronten 11 derart räumlich moduliert, daß auf dem Detektor 13 anstelle der punktförmigen Abbildung 20 des Objektes 10 eine Intensitätsverteilung 14' mit mehr als einem Intensitätsmaximum entsteht. Die Detektorsignale werden in eine Auswerteeinrichtung 17 übertragen, in der die Lage der Intensitätsmaxima der Intensitätsverteilung 14' ermittelt wird. Mit Hilfe der Strukturfunktion des optischen Elements 14 wird daraus der horizontale und vertikale Winkel der einfallenden Wellenfronten 11, also die Richtung zum beobachteten Objekt 10 bestimmt.

Diese Richtung kann besonders präzise bestimmt werden, wenn die Ortsgrundfrequenz oder eine der Ortsoberfrequenzen der Intensitätsverteilung 14' mit der Ortsgrundfrequenz der Detektorstrukturen ein niederfrequentes Überlagerungsmuster bildet. Dieses Überlagerungsmuster ist sehr empfindlich auf seitliche Bewegungen des Objektes 10, also auf Richtungsänderungen der in die Abbildungsoptik 12 einfallenden Strahlung, die entsprechende Verschiebungen der Intensitätsverteilung 14' auf dem Detektor 13 bewirken. Somit kann auch eine sehr präzise dynamische Messung erfolgen und eine laterale Bewegung des Objekts 10 exakt registriert, gemessen und verfolgt werden. Falls dabei das Objekt 10 den Erfassungsbereich der Anordnung in Fig. 1a verläßt, kann bei Motorisierung und Automatisierung der Anordnung das Objekt 10 kontinuierlich über den gesamten Raumwinkelbereich verfolgt werden.

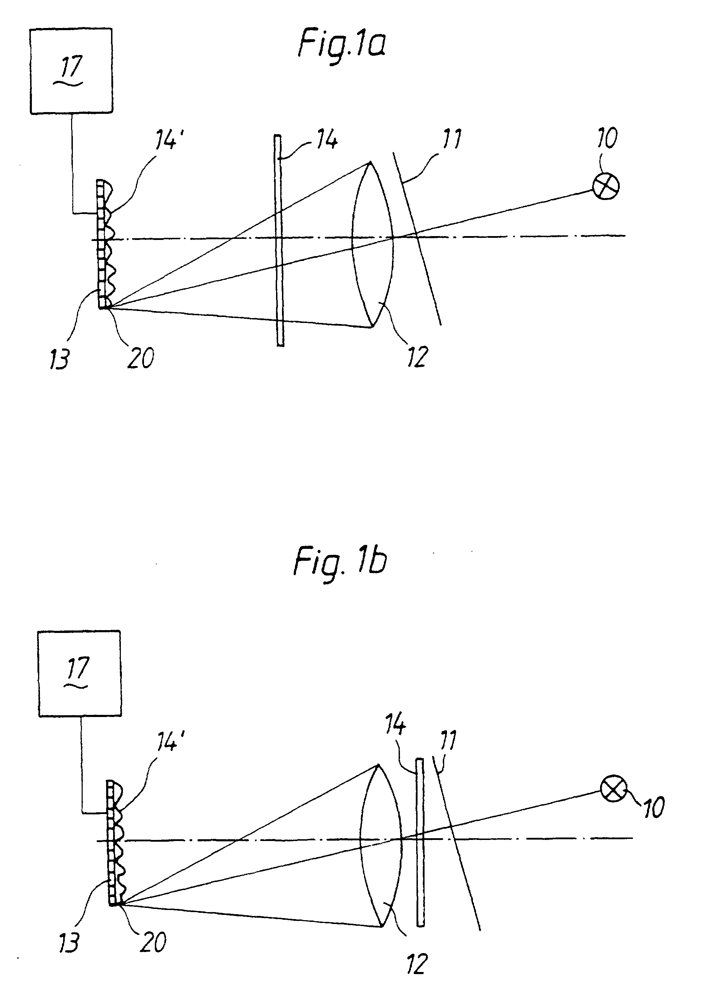

Als ein die Wellenfront strukturierendes optisches Element 14 dient hier eine Glasplatte mit einer eingeätzten Struktur. Das optische Element 14 ist somit im Glassubstrat monolithisch integriert. Es kann auch ein Amplituden- oder Phasenhologramm verwendet werden. Andere Realisierungsmöglichkeiten sind oben bereits genannt worden. Das optische Element 14 wird vorzugsweise in der Nähe oder in der Austrittspupille oder einer dazu konjugierten Pupillenebene der Abbildungsoptik 12 angeordnet. Eine solche konjugierte Pupillenebene kann auch vor der Abbildungsoptik 12, also zwischen dieser und dem Objekt 10 liegen. Ein an dieser Stelle angeordnetes optisches Element 14 ist in Fig.1b gezeigt.

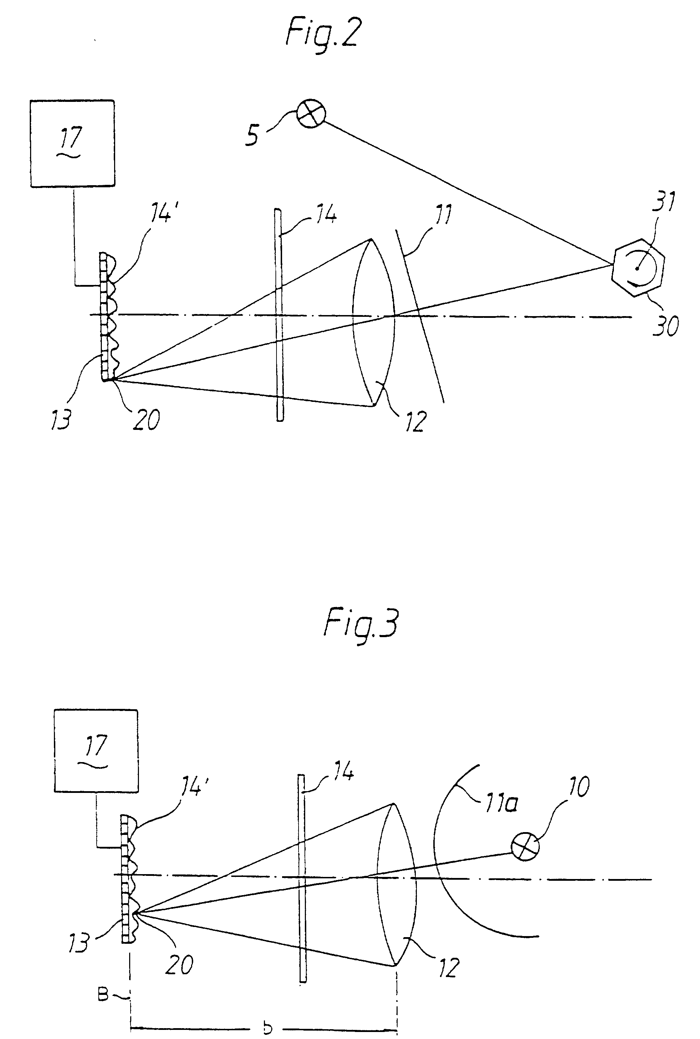

Die Darstellung gemäß Fig.2 zeigt als beobachtetes Objekt einen Drehspiegel 30, der in diesem Ausführungsbeispiel aus 6 ebenen Spiegeln zusammengesetzt ist. Seine Drehachse 31 ist stationär angeordnet. Eine Strahlungsquelle 5 ist ebenfalls stationär angeordnet und beleuchtet den Drehspiegel 30, der die auftreffende Strahlung reflektiert. Der Reflexionswinkel ist dabei von der Drehlage des Drehspiegels 30 abhängig. Somit besitzt die reflektierte Strahlung eine der Drehlage zugeordnete Richtung. Eine Drehbewegung des Drehspiegels 30 bewirkt eine Richtungsänderung der reflektierten Strahlung. Mit der dargestellten Anordnung und der erfindungsgemäßen Richtungsmessung kann die Drehlage des Drehspiegels 30 hochpräzise ermittelt werden.

In der Darstellung nach Fig.3 empfängt die Abbildungsoptik 12 kugelförmige Wellenfronten 11a. Das Objekt 10 befindet sich also in großer Nähe zur Abbildungsoptik 12. Um eine Abbildung zu gewährleisten, befindet sich deswegen der Detektor 13 in einer Bildebene B. Je nach Abstand zwischen dem Objekt 10 und der Abbildungsoptik 12 verändert sich bei einer Scharfeinstellung die Bildweite b und somit die Lage der Intensitätsverteilung auf dem Detektor. Dies ist bei der Richtungsbestimmung zu berücksichtigen.

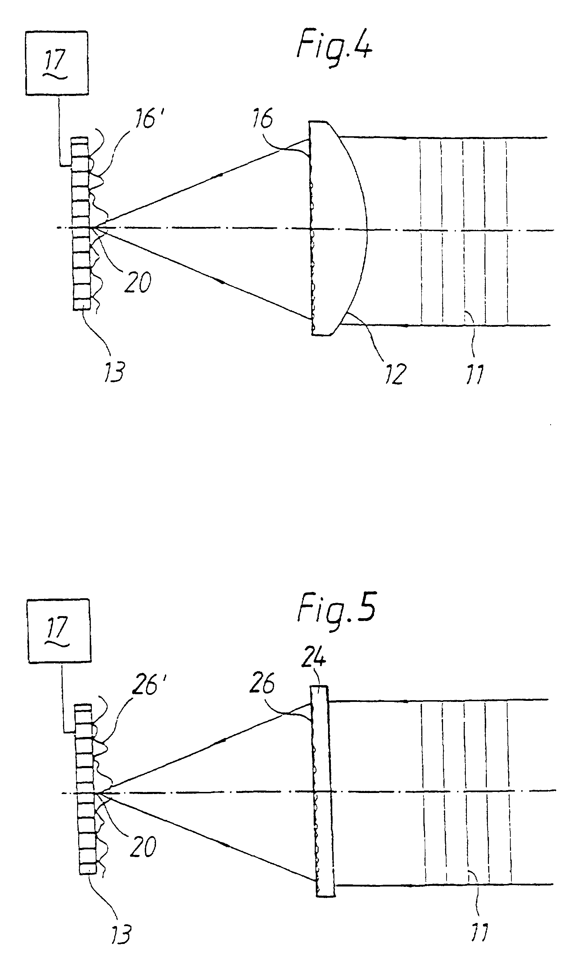

Im Ausführungsbeispiel nach Fig.4 ist als Abbildungsoptik 12 ein plankonvexes Objektiv gezeigt. Auf dessen Planfläche sind Strukturen 16 aufgebracht. Die Strukturen 16 sind denen des optischen Elements 14 gleichartig, wie sie in der Beschreibung von Fig.1a erwähnt sind. Insbesondere können die Strukturen 16 auch Beugungsstrukturen sein. Sie werden beispielsweise durch Ätzen oder Aufdampfen hergestellt oder als Folie aufgebracht. Anstelle einer nur wenige Informationen liefernden punktförmigen Abbildung 20 der einfallenden ebenen Wellenfronten 11 bewirken die Strukturen 16 eine Intensitätsverteilung 16'. Daraus resultieren für die Richtungsmessung die bereits genannten Vorteile der höheren Meßgenauigkeit, der Meßbereichserweiterung und der Kompaktheit des optisch-mechanischen Aufbaus. In diesem Ausführungsbeispiel wird zudem auch der geringe Bauteileaufwand mit letztlich nur einem einzigen optischen Bauteil verdeutlicht.

Fig.5 zeigt ein optisches Element 24, das mit Hilfe seiner Strukturen 26 abbildende Eigenschaften aufweist und zugleich die Wellenfront der einfallenden Strahlung strukturiert. Somit erzeugen die Strukturen 26 aus den einfallenden Wellenfronten 11 eine aus mehreren Intensitätsmaxima bestehende Intensitätsverteilung 26' bei gleichzeitiger Scharfstellung.

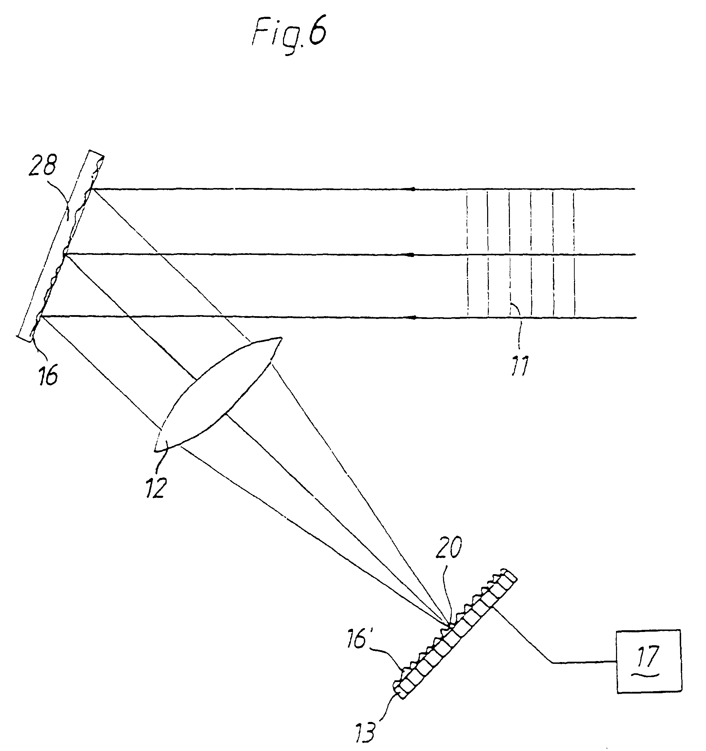

In den Ausführungsbeispielen nach Fig. 1-5 arbeiten die die Wellenfront der Strahlung strukturierenden optischen Elemente in Transmission. Hingegen zeigt Fig.6 ein in Reflexion arbeitendes, die Wellenfront strukturierendes optisches Element 28. Es können die gleichen Strukturen 16 wie beim transmissiven optischen Element 14 eingesetzt werden mit einer verspiegelten Rückseite des optischen Elements 28. Die Strukturen 16 können aber auch in sich bereits reflektierende Eigenschaften besitzen. Die Abbildung der Strahlung erfolgt mittels der refraktiven Abbildungsoptik 12.

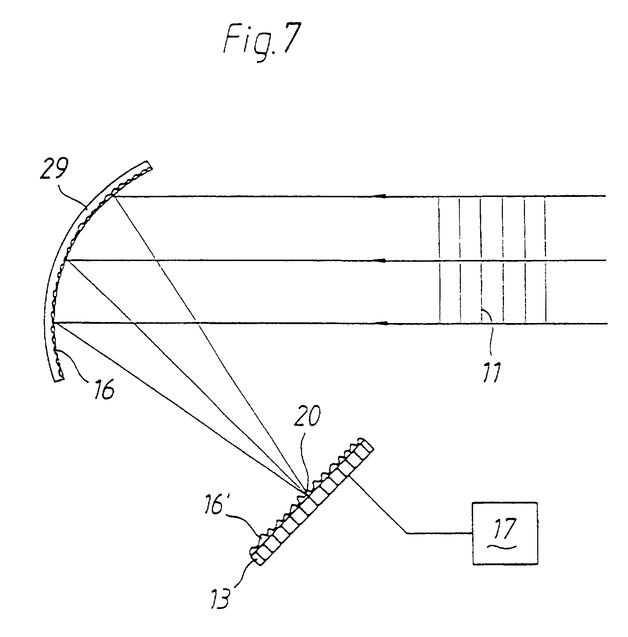

Andererseits kann auch eine reflexive Abbildungsoptik wie beispielsweise ein Konkavspiegel 29 gemäß Fig.7 zur Abbildung der Wellenfronten 11 verwendet werden. In diesem Ausführungsbeispiel sind die Strukturen 16, die die Intensitätsverteilung 16' erzeugen, auf der Innenfläche des Konkavspiegels 29 aufgebracht. Die prinzipielle Funktionsweise entspricht derjenigen der obigen Ausführungsbeispiele.

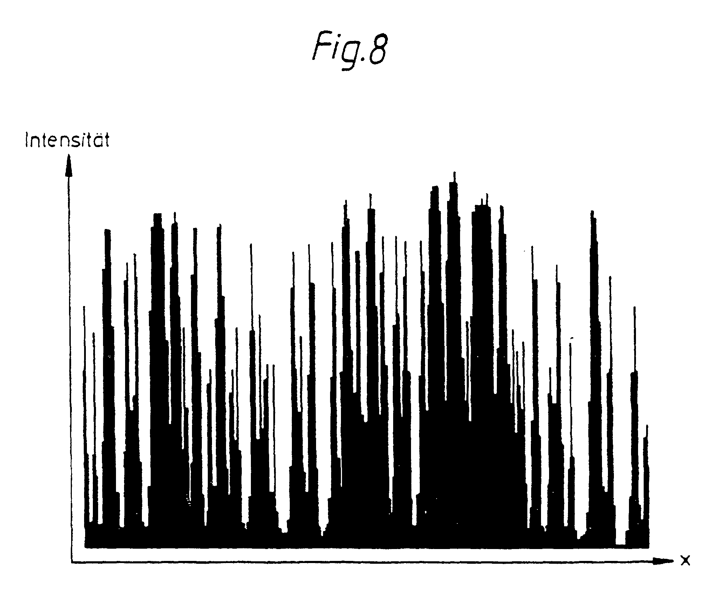

Bei Verwendung eines zweidimensional ortsempfindlichen Detektors 13 wird die Intensitätsverteilung, wie sie mit einem der in den Fig. 1-7 gezeigten, die Wellenfront strukturierenden optischen Elemente erzeugt wird, in zwei Dimensionen zugleich erfaßt. Fig. 8 zeigt aus dieser zweidimensionalen Intensitätsverteilung einen Ausschnitt, nämlich den Verlauf der Intensität in Abhängigkeit der Koordinate x bei einer bestimmten Koordinate y des Detektors 13. Im übrigen kann bekanntermaßen zur Erfassung der zweidimensionalen Lage einer Intensitätsverteilung auch ein eindimensionaler, nur in der x-Koordinate ortsempfindlicher Detektor 13 genügen. Hierbei muß aber eine spezielle, eindeutig von der y-Koordinate abhängige Intensitätsverteilung verwendet werden. Um aus einer solchen, von einem linearen oder flächigen ortsempfindlichen Detektor 13 erfaßten zweidimensionalen Intensitätsverteilung die Richtung zu dem Objekt 10 zu ermitteln, wird im folgenden beispielhaft von einer einfallenden ebenen Wellenfront 11 ausgegangen.

Eine aus einer bestimmten Bezugsrichtung kommende ebene Welle wird durch die elektrische Feldstärke **E = A** ^{*} exp (i**kr**) beschrieben, mit **A** als komplexer Amplitude, die das hier nicht interessierende zeitliche Verhalten und die Anfangsphase der Welle beschreibt, und dem Wellenzahlvektor **k** und dem Ortsvektor **r**, die im komplexen Exponenten der e-Funktion stehen. Der Wellenzahlvektor **k** steht senkrecht auf der Wellenfront 11 und gibt somit die Richtung der Strahlung und somit auch die Richtung zum Objekt an. Die elektrische Feldstärke **E** wird mit der von den Ortskoordinaten abhängigen Strukturfunktion S des optischen Elements, die mit der Herstellung des Elements bekannt ist, multipliziert. Nach Fourier-Transformation bzw. gegebenenfalls nach Berechnung des Fresnel-Integrals und Bildung des Betragsquadrats ergibt sich eine Intensitätsverteilung für die Bezugsrichtung.

Diese Intensitätsverteilung liegt anschaulich gesprochen als Luftbild in der Detektorebene vor. Aus diesem Luftbild entsteht durch die diskreten, d.h. aus einzelnen Pixeln bestehenden Strukturen des optoelektronischen Detektors 13 das detektierte Bild. Mit Hilfe der bekannten Detektorstrukturen läßt sich in Fortführung des bisherigen Rechenganges aus dem Luftbild das detektierte Bild berechnen. Diese Berechnung kann durch stellenweise Integration des Luftbildes, also durch eine Integration bei jedem Pixel, oder auch durch mathematisch äquivalente Verfahren erfolgen.

Eine laterale Bewegung des Objekts 10, also eine Richtungsänderung zum Objekt 10 führt zu einer Veränderung des Einfallswinkels der einfallenden Welle und dadurch im einfachsten Fall zu einem seitlichen Versatz des detektierten Bildes. In einem solchen Fall kann der Versatz des detektierten Bildes gegenüber dem für die Bezugsrichtung berechneten Bild durch Korrelation oder durch andere Schätzalgorithmen festgestellt werden. Da der Zusammenhang zwischen diesem Versatz und dem horizontalen und vertikalen Einfallswinkel der Strahlung zu der Bezugsrichtung bekannt ist, sind diese Einfallswinkel als Richtungskoordinaten des Objekts 10 schließlich ermittelt.

In anderen Fällen, wenn z.B. durch Überlagerung der im Luftbild vorhandenen Ortsfrequenzen mit der Ortsfrequenz des Detektors 13 niederfrequente Überlagerungsmuster gebildet werden, besteht ein komplexerer Zusammenhang zwischen dem Luftbild und dem detektierten Bild. Ein Versatz des Luftbildes führt zusätzlich zu einer Veränderung der Form des detektierten Bildes. In einem solchen Fall muß die Wechselwirkung zwischen dem Luftbild und den strahlungsempfindlichen Strukturen des Detektor 13 in einem Schätzalgorithmus berücksichtigt werden.

Im übrigen kann auch die Richtung zu einem ausgedehnten Objekt 10 ermittelt werden, das selbst Strukturen aufweist. Bei der Abbildung eines solchen Objekts 10 enthält natürlich auch das Objektbild die entsprechenden Strukturen des Objekts 10, was bereits ohne ein die Wellenfront strukturierendes optisches Element eine Intensitätsverteilung auf dem Detektor 13 ergibt. Eine solche Intensitätsverteilung wird aber durch das optische Element noch erheblich feiner strukturiert, so wie es die Intensitätsverteilung gemäß Fig. 8 verdeutlicht. Diese kann deshalb mit der Vielzahl von Intensitätsmaxima auch als Intensitätsmuster oder als Code deklariert werden. Der Code wird dem reinen Objektbild zusätzlich aufgeprägt. Selbstverständlich muß bei einem ausgedehnten, mit Strukturen versehenen Objekt 10 dessen Strukturfunktion bekannt sein, die ebenfalls in den beschriebenen Rechengang eingeht.

## Patentansprüche

1. Verfahren zur Bestimmung der durch einen horizontalen und vertikalen Winkel definierten Richtung zu einem Objekt (10;30), welches eine optische Strahlung emittiert oder reflektiert, wobei die Strahlung von einer Abbildungsoptik (12;29) zur Erzeugung eines reellen Objektbildes (20) auf einem ortsauflösenden optoelektronischen Detektor (13) aufgenommen wird, die Detektorsignale einer Auswerteeinrichtung (17) zugeführt werden und aus den Koordinaten des Objektbildes (20) auf dem Detektor (13) die Richtung zum Objekt (10;30) ermittelt wird, **dadurch gekennzeichnet**, dass die Wellenfront (11,11a) der vom Objekt (10;30) kommenden Strahlung zusätzlich zur abbildenden Wirkung der Abbildungsoptik (12;29) mit einem optischen Element (14;16;24) derart strukturiert wird, dass auf dem Detektor (13) eine Intensitätsverteilung (14';16';26') mit mehr als einem Intensitätsmaximum erzeugt wird, wobei die Intensitätsverteilung (14';16';26') nicht durch Schattenwurf entsteht, und dass aus der gemessenen Intensitätsverteilung (14';16';26') unter Einbeziehung der Strukturfunktion des optischen Elements (14;16;24) die Richtung zum Objekt (10;30) ermittelt wird.

2. Verfahren nach Anspruch 1, **dadurch gekennzeichnet**, dass die Ortsgrundfrequenz oder eine harmonische Ortsoberfrequenz der von dem optischen Element (14;16;24) auf dem Detektor (13) erzeugten Intensitätsverteilung (14';16';26') mit der Ortsgrundfrequenz der strahlungsempfindlichen Strukturen des Detektors (13) ein niederfrequentes Überlagerungsmuster bildet.

3. Vorrichtung zur Bestimmung der durch einen horizontalen und vertikalen Winkel definierten Richtung zu einem Objekt (10;30), welches eine optische Strahlung emittiert oder reflektiert, wobei die Strahlung von einer Abbildungsoptik (12;29) zur Erzeugung eines reellen Objektbildes (20) auf einem ortsauflösenden optoelektronischen Detektor (13) aufgenommen wird, die Detektorsignale einer Auswerteeinrichtung (17) zugeführt werden und aus den Koordinaten des Objektbildes (20) auf dem Detektor (13) die Richtung zum Objekt (10;30) ermittelt wird, **dadurch gekennzeichnet**, dass im Strahlengang zwischen dem Objekt (10;30) und dem Detektor (13)zusätzlich zur Abbiuldungsoptik (12;29) ein optisches Element (14;16;24) angeordnet ist, das die Wellenfront (11,11a) der vom Objekt (10;30) kommenden Strahlung derart strukturiert, dass auf dem Detektor (13) eine Intensitätsverteilung (14';16';26') mit mehr als einem Intensitätsmaximum erzeugtwird, wobei die Intensitätsverteilung (14';16';26') nicht durch Schattenwurf entsteht, und dass in der Auswerteeinrichtung (17) aus der gemessenen Intensitätsverteilung (14';16';26') unter Einbeziehung der Strukturfunktion des optischen Elements (14;16;24) die Richtung zum Objekt (10;30) ermittelt wird.

4. Vorrichtung nach Anspruch 3, **dadurch gekennzeichnet**, dass das die Wellenfront (11,11a) der Strahlung strukturierende optische Element (14;16;24) in der Ebene der Austrittspupille oder in einer dazu konjugierten Pupillenebene der Abbildungsoptik (12;29) angeordnet ist.

5. Vorrichtung nach Anspruch 3 oder 4, **dadurch gekennzeichnet,** dass auf einer der Oberflächen der Abbildungsoptik (12;29) ein die Wellenfront (11,11a) der Strahlung strukturierendes optisches Element (14;16;24) aufgebracht ist.

6. Vorrichtung nach Anspruch 3, **dadurch gekennzeichnet,** dass das die Wellenfront (11,11a) der Strahlung strukturierende optische Element (14;16;24) zugleich abbildende Eigenschaften aufweist und die Abbildungsoptik (12;29) ersetzt.

7. Vorrichtung nach einem der Ansprüche 3 bis 6, **dadurch gekennzeichnet**, dass das optische Element (14;16;24) ortsabhängig unterschiedlich refraktive Strukturen enthält

8. Vorrichtung nach einem der Ansprüche 3 bis 6, **dadurch gekennzeichnet**, dass das optische Element (14;16;24) Beugungsstrukturen enthält.

9. Vorrichtung nach einem der Ansprüche 3 bis 5, **dadurch gekennzeichnet**, dass das optische Element (14;16;24) Strukturen enthält, die die Strahlung ortsabhängig unterschiedlich polarisieren.

10. Vorrichtung nach einem der Ansprüche 3 bis 9, **dadurch gekennzeichnet,** dass das die Wellenfront (11,11a) der Strahlung strukturierende optische Element (14;16;24) in Transmission arbeitet.

11. Vorrichtung nach einem der Ansprüche 3 bis 9, **dadurch gekennzeichnet,** dass das die Wellenfront (11,11a) der Strahlung strukturierende optische Element (14;16;24) in Reflexion arbeitet.

## Claims

1. Method for determining the direction, defined by a horizontal and a vertical angle, in which an object (10; 30) which emits or reflects an optical beam is located, the beam being picked up by an imaging optical system (12; 29) for generating a real object image (20) on a position-resolving optoelectronic detector (13), the detector signal being fed to an evaluation means (17) and the direction in which the object (10; 30) is located being determined from the coordinates of the object image (20) on the detector (13), characterized in that the wave front (11, 11a) of the beam arriving from the object (10; 30) being structured, in addition to the imaging effect of the imaging optical system (12; 29), with an optical element (14; 16; 24) in such a way that an intensity distribution (14', 16'; 26') having more than one intensity maximum is produced on the detector (13), the intensity distribution (14'; 16'; 26') not being formed by the throwing of shadows, and that the direction in which the object (10; 30) is located is determined from the measured intensity distribution (14'; 16'; 26') using the structure function of the optical element (14; 16; 24).

2. Method according to Claim 1, characterized in that the fundamental spatial frequency or a harmonic spatial frequency of the intensity distribution (14'; 16'; 26') produced by the optical element (14; 16; 24) on the detector (13), together with the fundamental spatial frequency of the radiation-sensitive structures of the detector (13), forms a low-frequency superposition pattern.

3. Device for determining the direction, defined by a horizontal and a vertical angle, in which an object (10; 30) which emits or reflects an optical beam is located, the beam being picked up by an imaging optical system (12; 29) for generating a real object image (20) on a position-resolving optoelectronic detector (13), the detector signal being fed to an evaluation means (17) and the direction in which the object (10; 30) is located being determined from the coordinates of the object image (20) on the detector (13), characterized in that an optical element (14; 16; 24) which structures the wave front (11, 11a) of the beam arriving from the object (10; 30) in such a way that an intensity distribution (14'; 16'; 26') having more than one intensity maximum is produced on the detector (13) is arranged in the beam path between the object (10; 30) and the detector (13), in addition to the imaging optical system (12; 29), the intensity distribution (14'; 16'; 26') not being formed by the throwing of shadows, and that the direction in which the object (10; 30) is located is determined in the evaluation means (17) from the measured intensity distribution (14'; 16'; 26') using the structure function of the optical element (14; 16; 24).

4. Device according to Claim 3, characterized in that the optical element (14; 16; 24) structuring the wave front (11, 11a) of the beam is arranged in the plane of the exit pupil or in a conjugated pupil plane of the imaging optical system (12; 29).

5. Device according to Claim 3 or 4, characterized in that an optical element (14; 16; 24) structuring the wave front (11, 11a) of the beam is applied to one of the surfaces of the imaging optical system (12; 29).

6. Device according to Claim 3, characterized in that the optical element (14; 16; 24) structuring the wave front (11, 11a) of the beam simultaneously has imaging properties and replaces the imaging optical system (12; 29).

7. Device according to any of Claims 3 to 6, characterized in that the optical element (14; 16; 24) contains structures whose refraction differs as a function of location.

8. Device according to any of Claims 3 to 6, characterized in that the optical element (14; 16; 24) contains diffracting structures.

9. Device according to any of Claims 3 to 5, characterized in that the optical element (14; 16; 24) contains structures which polarize the beam differently as a function of location.

10. Device according to any of Claims 3 to 9, characterized in that the optical element (14; 16; 24) structuring the wave front (11, 11a) of the beam operates by transmission.

11. Device according to any of Claims 3 to 9, characterized in that the optical element (14; 16; 24) structuring the wave front (11, 11a) of the beam operates by reflection.

## Revendications

1. Procédé de détermination de la direction vers un objet (10; 30), définie par un angle horizontal et un angle vertical, opérant par émission ou réflexion d'un rayonnement optique, le rayonnement étant capté par une optique d'illustration (12; 29) pour générer une image d'objet réel (20) sur un détecteur (13) optoélectronique présentant une résolution locale, les signaux de détecteur étant amenés à un dispositif d'évaluation (17) et la direction vers l'objet (10; 30) étant déterminée à partir des coordonnées de l'objet image (20) sur le détecteur (13), caractérisé en ce que le front d'ondes (11, 11a) du rayonnement venant de l'objet (10; 30) est structuré, en plus de l'effet illustratif opéré par l'optique d'illustration (12; 29), à l'aide d'un élément optique (14; 16; 24), de manière que, sur le détecteur (13) soit générée une distribution d'intensité (14'; 16'; 26') ayant un nombre de maxima d'intensité supérieur à un, la distribution d'intensité (14'; 16'; 26') n'étant pas constituée par une projection d'ombre, et en ce que la direction vers l'objet (10; 30) est déterminée, à partir de la distribution d'intensité (14'; 16'; 26') mesurée, en impliquant la fonction de structuration opérée par l'élément optique (14; 16; 24).

2. Procédé selon la revendication 1, caractérisé en ce que la fréquence fondamentale locale, ou une fréquence supérieure locale harmonique de la distribution d'intensité (14'; 16'; 26') générée par l'élément optique (14; 16; 24) sur le détecteur (13), forme, avec la fréquence fondamentale locale des structures, sensibles au rayonnement, du détecteur (13), un motif de superposition à basse fréquence.

3. Dispositif de détermination de la direction vers un objet (10; 30), définie par un angle horizontal et un angle vertical, opérant par émission ou réflexion d'un rayonnement optique, le rayonnement étant capté par une optique d'illustration (12; 29) pour générer une image d'objet réel (20). sur un détecteur (13) optoélectronique présentant une résolution locale, les signaux de détecteur étant amenés à un dispositif d'évaluation (17) et la direction vers l'objet (10; 30) étant déterminée, à partir des coordonnées de l'objet image (20) sur le détecteur (13), caractérisé en ce que, dans le trajet suivi par le rayon, entre l'objet (10; 30) et le détecteur (13) est, en plus de l'optique d'illustration (12; 29), disposé un élément optique (14; 16; 24), qui structure le front d'ondes (11, 11a) du rayonnement venant de l'objet (10; 30), de manière que soit générée sur le détecteur (13) une distribution d'intensité (14'; 16'; 26') ayant un nombre de maxima d'intensité supérieur à un, la distribution d'intensité (14'; 16'; 26') n'étant pas produite par projection d'ombre, et en ce que la direction à l'objet (10; 30) est déterminée dans l'unité d'évaluation (17), à partir de la distribution d'intensité (14'; 16'; 26') mesurée, en impliquant la fonction de structuration opérée par l'élément optique (14; 16; 24).

4. Dispositif selon la revendication 3, caractérisé en ce que l'élément optique (14; 16; 24), structurant le front d'ondes (11; 11a) du rayonnement, est disposé dans le plan de la pupille de sortie ou dans un plan de pupille, lui étant à peu près conjugué, de l'optique d'illustration (12; 29).

5. Dispositif selon la revendication 3 ou 4, caractérisé en ce qu'un élément optique (14; 16; 24) structurant le front d'ondes (11; 11a) du rayonnement est impliqué sur l'une des surfaces de l'optique d'illustration (12; 29).

6. Dispositif selon la revendication 3, caractérisé en ce que l'élément optique (14; 16; 24), structurant le front d'ondes (11; 11a) du rayonnement, présente en même temps des propriétés d'imagerie et remplace l'optique d'illustration (12; 29).

7. Dispositif selon l'une des revendications 3 à 6, caractérisé en ce que l'élément optique (14; 16; 24) contient des structures différemment réfractives.

8. Dispositif selon l'une des revendications 3 à 6, caractérisé en ce que l'élément optique (14; 16; 24) contient des structures diffractives.

9. Dispositif selon l'une des revendications 3 à 5, caractérisé en ce que l'élément optique (14; 16; 24) contient des structures polarisant différemment le rayonnement, selon le site.

10. Dispositif selon l'une des revendications 3 à 9, caractérisé en ce que l'élément optique (14; 16; 24), structurant le front d'ondes (11; 11a), du rayonnement travaille en mode transmission.

11. Dispositif selon l'une des revendications 3 à 9, caractérisé en ce que l'élément optique (14; 16; 24), structurant le front d'ondes (11; 11a) du rayonnement, travaille en mode réflexion.
